# EUROPEAN PATENT SPECIFICATION

(11) **EP 4 183 455 B1**
(45) Date of publication and mention of the grant of the patent: **17.01.2024**
(21) Application number: 22213426.4
(22) Date of filing: 27.11.2019
(51) Int. Cl.: A63B 21/012, A63B 21/02

(54) **A TORQUE RESISTANCE MECHANISM FOR A MULTIFUNCTIONAL EXERCISE APPARATUS**
DREHMOMENTWIDERSTANDSMECHANISMUS FÜR EINE MULTIFUNKTIONELLE ÜBUNGSVORRICHTUNG
MÉCANISME DE RÉSISTANCE DE COUPLE POUR APPAREIL D'EXERCICE MULTIFONCTIONNEL

(30) Priority: 28.11.2018 DK PA201870784; 28.11.2018 DK PA201870785; 28.11.2018 DK PA201870786; 28.11.2018 DK PA201870787
(43) Date of publication of application: 24.05.2023
(62) Divisional of application: 19889235.8
(73) Proprietor: Danish Aerospace Company A/S, 5250 Odense SV (DK)
(72) Inventor: Hansen, Daniel Hasse Hagen, 5250 Odense SV (DK)
(74) Representative: Nordic Patent Service A/S

(56) References cited:
- EP-A2- 0 214 748
- EP-A2- 3 278 842
- WO-A2-2004/094003

## Description

### TECHNICAL FIELD

The disclosure relates to a torque resistance mechanism for a multifunctional exercise apparatus.

### BACKGROUND

In microgravity, appearing in space, human muscles are in the slack state all the time, which accelerates muscular atrophy. Therefore, astronauts and space tourists need to exercise when they are on a mission or traveling in space for an extended period of time.

Earth-bound exercise apparatuses usually apply actual weights to provide resistance for the user. However, in microgravity it is necessary to obtain the resistance in other ways such as by means of stretchable cords, pneumatic cylinders, electric brakes, torque bands, etc.

A multifunctional exercise apparatus is disclosed in WO2004/094003A2, which uses a torsional spring torque, and in US 2014/0213414, which uses a pneumatic actuated resistance mechanism. The user interacts with the apparatus by grasping a bar connected to the pneumatic actuated resistance mechanism. In an alternative invention, disclosed in US 2018/0021614, the resistance mechanism is an electric resistance mechanism selected from a group consisting of a linear actuator brake, a linear actuator electromechanical brake, a linear actuator friction disc brake, a stepper motor brake, a servo motor brake, a servo motor electromagnetic brake, a servo motor friction disc brake, and an electric particle brake.

Due to weight and space constraints, only a limited number of exercise apparatuses can be brought onboard a spaceship. Furthermore, some of the known resistance mechanisms have very large sizes and masses. Thus, astronauts and space tourists face a very limited choice of exercise apparatuses, and exercises, when in space.

### SUMMARY

It is an object of the present invention to provide an improved torque resistance mechanism for a multifunctional exercise apparatus. The foregoing and other objects are achieved by the features of the independent claim. Further implementation forms are apparent from the dependent claims, the description, and the figures.

An aspect of the invention relates to a torque resistance mechanism for a multifunctional exercise apparatus, the torque resistance mechanism comprising an electrical torque motor/generator having a hollow space, a torsional spring accommodated co-axially in the hollow space, a part of a coupling mechanism having a first and a second part, and a selector having a first and a second position, wherein the selector enables a user to engage the part of the coupling mechanism in a first position with the electrical torque motor/generator and in a second position with the torsional spring.

When the power supply is working properly, the selector will normally be positioned in the first position for providing the user with the added features provided by the electrical torque motor/generator. However, in case the power supply is disconnected or the electrical circuit stops operating properly, the user has the option to position the selector in the second position for engaging the torsional spring. The second position of the selector may herein be referred to as "contingency mode" because the torsional spring has reduced lifetime. However, the contingency mode will provide time until a replacement is in place. Both cycling and rowing can be performed in "contingency mode", however, resistive exercise is limited.

In an embodiment of the invention, the electrical torque motor/generator comprises a stator attached to a first housing and a rotor capable of being engaged with a part of the coupling mechanism. The annular stator is usually provided in a corresponding essentially cylindrical first housing. The rotor is rotatably provided in the hollow space defined by the annular stator. The center part of the rotor is suitably provided with an engagement mechanism for engagement with the hub. In the embodiment illustrated, the hub on an outer circumferential surface is provided with numerous teeth or "dog teeth" that mate with matching openings machined or otherwise provided in the center of the rotor.

In a suitable embodiment, the part of the coupling mechanism comprises an axially movable hub having a first position for engagement with the electrical torque motor/generator and a second position for engagement with the torsional spring. When the circumferential teeth of the hub are engaged with the corresponding openings in the rotor center the engagement is locked. However, when a user moves the selector it causes the hub to move in an axial direction and thereby disengage the connection between the hub and the electrical torque motor/generator. The hub may be provided with a first part of a second set of engagement mechanism for the second position. Thus, an end section of the hub may in the embodiment illustrated in the present application be provided with a recessed rosette having a shape complementary to a shape of the second part of the second set of engagement mechanism provided on an end of the torsional spring.

In an implementation of the present invention, the torsional spring is present in a second housing rotatably mounted in the first housing. The torsional spring may normally be in a relaxed state when the contingency mode is not applied. However, when it is desired to adjust the exercise apparatus to the contingency mode the torsional spring initially needs to be tensioned by rotating the second housing. When the torsional spring has been tensioned the user will be experiencing a load when the cable reel system is engaged and the cables are pulled during the concentric phase of the exercise. During the return phase of the exercise the cables will be returned to the cable reel system by the action of the torsional spring.

In an embodiment of the invention a first end of the torsional spring is attached to the second housing and a second end of the torsional spring is attached to a spring rotor connectable with the part of the coupling mechanism. Usually, the torsion spring is a spiral torsion spring, and in this case, the first end is generally the outer end of the torsional spring. The other end of the spiral torsion spring attached to the spring rotor will then be the end closest to the center. The spring rotor is usually provided with a co-axial dog teeth gear having a shape capable of mating with the recessed rosette of the hub. When the torque resistance mechanism is in the contingency mode, i.e. when the selector is placed in the second position, the user can perform exercises using the spiral torsion spring as return force during rowing, when the other part of the coupling mechanism appearing on the cable reel system is engaged with the part of the coupling mechanism appearing on the hub.

In an embodiment of the invention, the second housing is provided with handles for rotating the second housing, said handles being provided with a releasable lock for releasing the torsional spring. The handles provide a grip for the user when the torsional spring is tensioned. When the grip on the handles are loosened by the user the lock prevents the tension from being released, unless the lock actively is deactivated.

In a certain implementation of the invention, the electrical torque motor/generator is controlled by a servo drive. Controlling the motor/generator with a servo drive enables the motor/generator to function as a servo motor with a high degree of speed and positional control. Generally, the rotor of the electrical torque motor/generator is equipped with an encoder connected to the servo drive. The encoder will allow the system to maintain a fixed load regardless of pull speed and direction.

In an embodiment of the invention, the electrical motor/generator is connected to a shunt circuity. The shunt circuity protects the motor DC bus against the back electromotive force created when the motor/generator is moved during the concentric phase of exercises. The shunt circuity may be provided in the housing also enclosing the cable reel system for guiding the heat generated away from the motor/generator.

These and other aspects will be apparent from the embodiments described below.

### BRIEF DESCRIPTION OF THE DRAWINGS

Fig. 1 discloses the multifunctional exercise apparatus in its first position,
Fig. 2 discloses the first module in which the lid has been removed for showing the cable reel system (not part of the invention),
Fig. 3 shows the flywheel with the lid of the second module removed (not part of the invention),
Fig. 4 shows a second position for the first and second modules in which the torque resistance mechanism of the first module may be operated independently of the action of the flywheel,
Fig. 5 discloses a third position of the first and second modules,
Fig. 6 shows an axle fitted with pedal arms and pedals at each end (not part of the invention),
Fig. 7 shows the biking seat for use in the cycling mode,
Fig. 8 shows the multifunctional exercise apparatus configured in the cycling mode,
Fig. 9 shows the multifunctional exercise apparatus configured in the rowing mode,
Fig. 10 shows the multifunctional exercise apparatus configured in the "dual rope mode".
Fig. 11 discloses the rope pulling unit connected to the multifunctional exercise apparatus,
Fig. 12 shows the rope pulling unit containing an endless rope,
Fig. 13 shows the cable reel system in an exploded view (not part of the invention),
Fig. 14 discloses the cable reel system in a cross-sectional view (not part of the invention),
Fig. 15 shows an exploded view of the torque resistance mechanism,
Fig. 16 shows the coupling mechanism being engaged with the rotor of the electrical torque motor/generator,
Fig. 17 shows the coupling mechanism being engaged with the rotor of the torsional spring,
Fig. 18 discloses the lid and the spring rotor of the torsional spring in exploded view,
Fig. 19 shows the spring housing of the torsional spring mounted rotatably in the housing of the torque resistance mechanism,
Fig. 20 discloses the second position in which the hub of the torque resistance mechanism is lifted,
Fig. 21 shows the first position in which the hub of the torque resistance mechanism is lowered,
Fig. 22 shows a part of the second module in an exploded view (not part of the invention),
Fig. 23 discloses the tension adjusting mechanism in the first position (not part of the invention).

### DETAILED DESCRIPTION

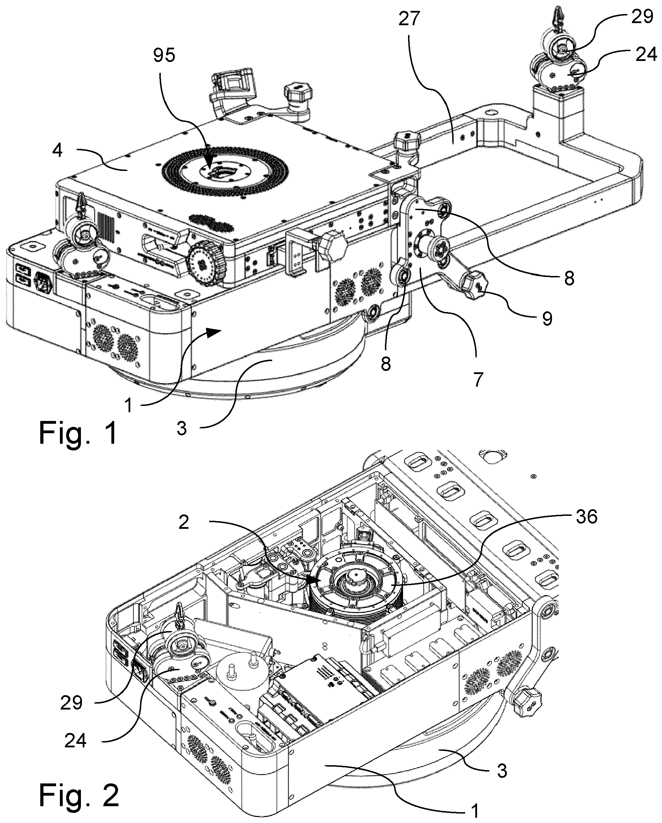

Figure 1 discloses the multifunctional exercise apparatus in its first position, i.e. in a position in which the force experienced by the user of the apparatus is obtained by the combined effect of a torque resistance mechanism 3 and a flywheel 5. A first module 1 of the multifunctional exercise apparatus has an essentially box shape with rounded corners. Figure 2 discloses the first module 1 with a removed lid for showing a cable reel system 2. The cable reel system 2 is operably connected to the torque resistance mechanism 3 that provides resistance when a cable 39 of the cable reel system 2 is pulled and that returns the cable 39 to a wound position on one of cable reels 36,37 when the cable 39 is not pulled.

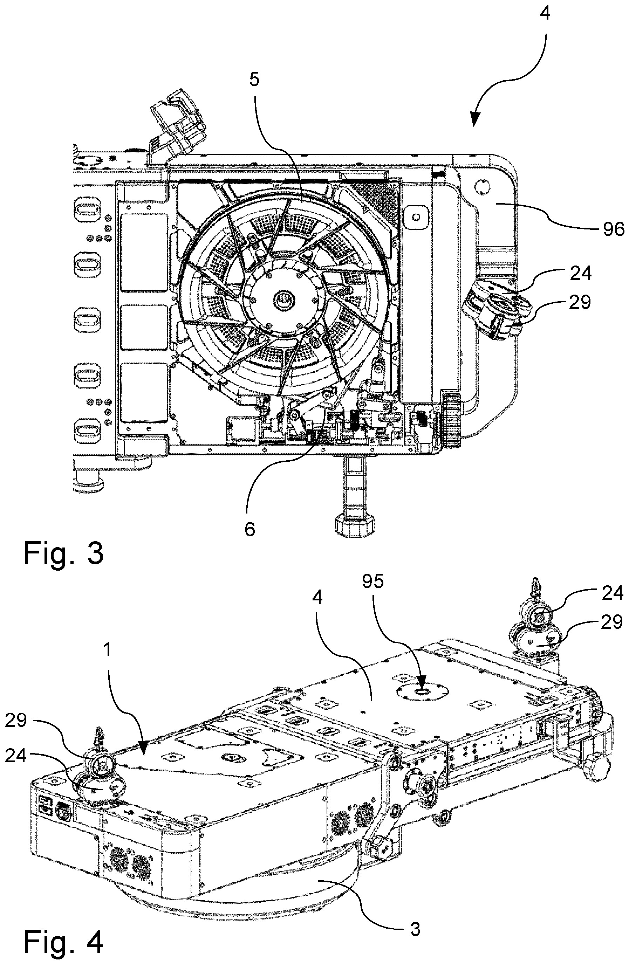

The multifunctional exercise apparatus furthermore comprises a second module 4. The second module 4 has an essentially box shape with slightly rounded corners. In figure 3, the lid of the second module has been removed to show the flywheel 5 contained within the box shaped module. Around a part of the perimeter of the flywheel 5, a braking band 6 is positioned for providing resistance to the inertia produced by the flywheel 5.

The first 1 and the second 4 modules can be arranged in at least two different positions as shown in figure 1 and figure 4, respectively. Figure 1 shows a first position in which the torque resistance mechanism 3 of the first module 1 is operably connected to the flywheel 5 positioned in the second module 4, i.e. the second module 4 is positioned on top of the first module 1. Figure 4 shows a second position for the first 1 and second 4 modules in which the torque resistance mechanism 3 of the first module can be operated independently of the action of the flywheel 5 of the second module 4 when a user pulls a cable 39 of the cable reel system 2.

The connection of the torque resistance mechanism 3 with the flywheel 5 may be performed by providing the torque resistance mechanism 3 with a first part of a coupling mechanism such as a hub 53 and the flywheel 5 with a second part of the coupling mechanism, such as a hub 95, whereby the hubs 53, 95 are positioned coaxially when the modules are in the first position for enabling an operable connection when an axle such as shaft 42 is provided in the hubs 53, 95.

The first module 1 and the second module 4 are connected along an edge of each of the modules by a hinge 7. The hinge 7 allows the first 1 and the second 4 modules to be moved relative to each other so as to obtain the first and second positions. The hinge 7 is a double hinge allowing a major surface of the first module 1 to extend flush with a major surface of the second module 4, thereby providing a platform for the user to, e.g., stand on. The double hinge includes two pivot joints 8 for pivoting the second module 4 to different positions relative to the first module 1. A handle 9 is provided for assisting the user in positioning the second module 4 in the desired position. The hinge 7 may be locked in a certain position to maintain the desired position of the modules 1, 4 during an exercise.

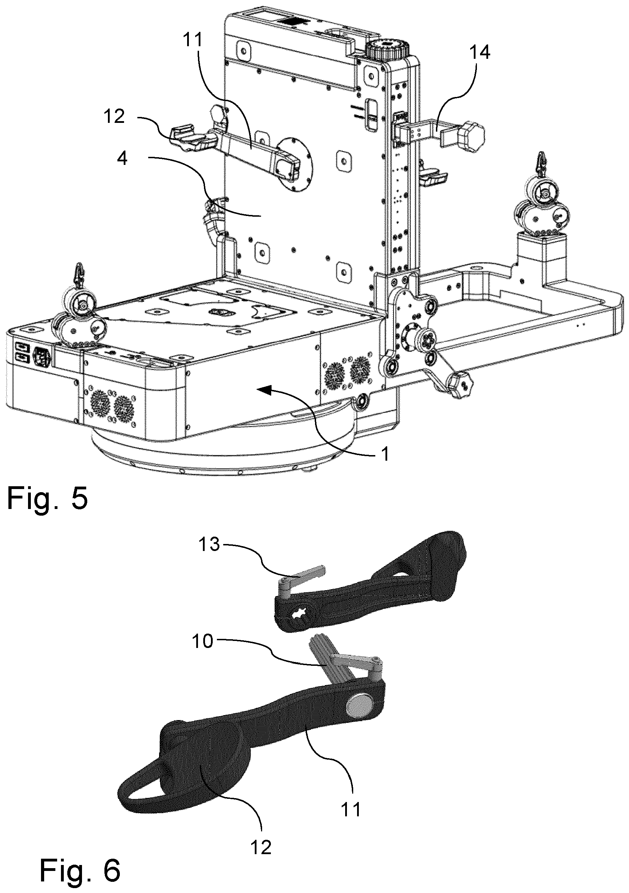

Figure 5 discloses a third position of the first 1 and second 4 modules relative to each other. In the third position, a main extent of the first module 1, i.e. the surface pointing vertically upwards in figure 5, is perpendicular to a main extent of the second module 4. The hub 95 of the second module 4 is provided with a throughgoing splined axle 10 fitted with pedal arms 11 and pedals 12 at each end when the first 1 and second 4 modules are in the third position. The pedal arms 11 are provided with snap locks 13 for fast and efficient mounting and dismounting of the equipment necessary for performing a cycling exercise.

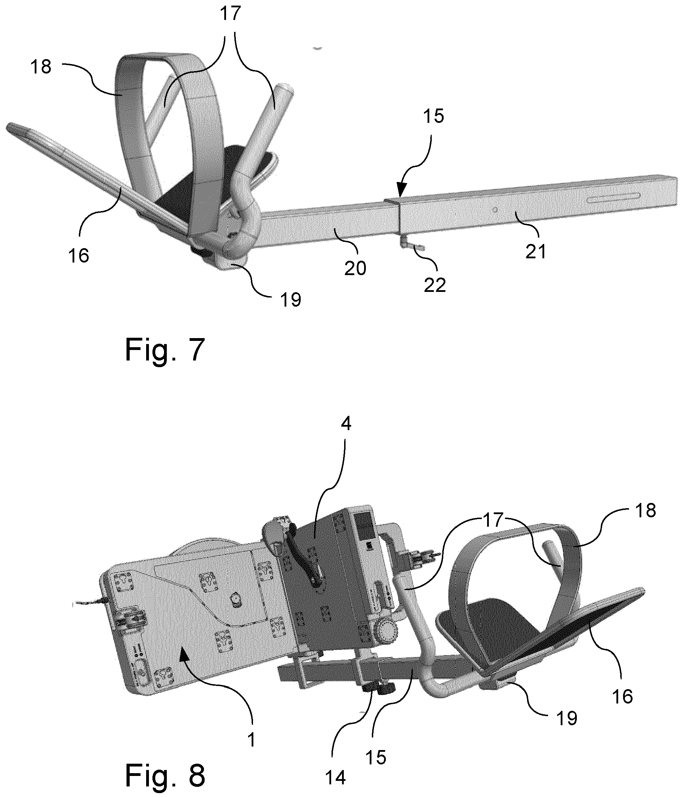

The second module 4 is provided with engaging means 14 for accommodating a seat post 15. Optionally, a second engaging means may be positioned on the hinge 7 for allowing the seat post 15 to be attached at two positions in order to obtain higher stability. The seat is provided with a back support 16, the angle of which can be adjusted. Additionally, the back support 16 may have 5-10 degrees of spring-loaded flex that can be enabled and disabled. For biking, the seat will be configured as shown in figure 7. The back support 16 will be used in combination with handles 17 to achieve a posture similar to a recumbent exercise ergometer. The back support 16 may be locked or allowed to flex depending on user preference. The seat post 15 comprises a waist strap 18 to keep the user down on the seat during exercise at microgravity. For biking, waist strap 18 can be used either in combination with, or instead of, handles 17. The inertia of the flywheel 5 makes it possible to adjust the workload in a way that feels similar to bicycling on ground. In one embodiment, the flywheel 5 is configured such that it continues to spin while the pedals 12 stay stationary when the user stops pedaling. This is possible due to a one-way bearing connecting the flywheel 5 to the axle 10.

For rowing, when the modules are in the first position, the back support 16 will generally be positioned in a more upright position. The spring-loaded flex of the back support 16 will provide the user with tactile feedback that they should not extend further when they feel the seat without hitting a "rigid wall". In rowing, the waist strap 18 is a necessity since the force from the cable 39 will generate a rotation away from the seat.

The seat is mounted on a carriage 19 that can slide on an inner tube 20 of the seat post 15 to allow the user to perform the rowing exercise. The sliding function can be locked in a top position when the apparatus is used for the cycling exercise. The inner tube 20 can be adjusted freely in an outer tube 21 and locked in any position with a snap lock 22 on the outer tube 21.

Fig. 8 show the multifunctional exercise apparatus configured in the cycling mode. The user initially is positioned in the seat by securing the strap 18 around the waist. Subsequently, cycling shoes (not showed) having clamps corresponding to the pedal locking system are clicked into the pedals 12.

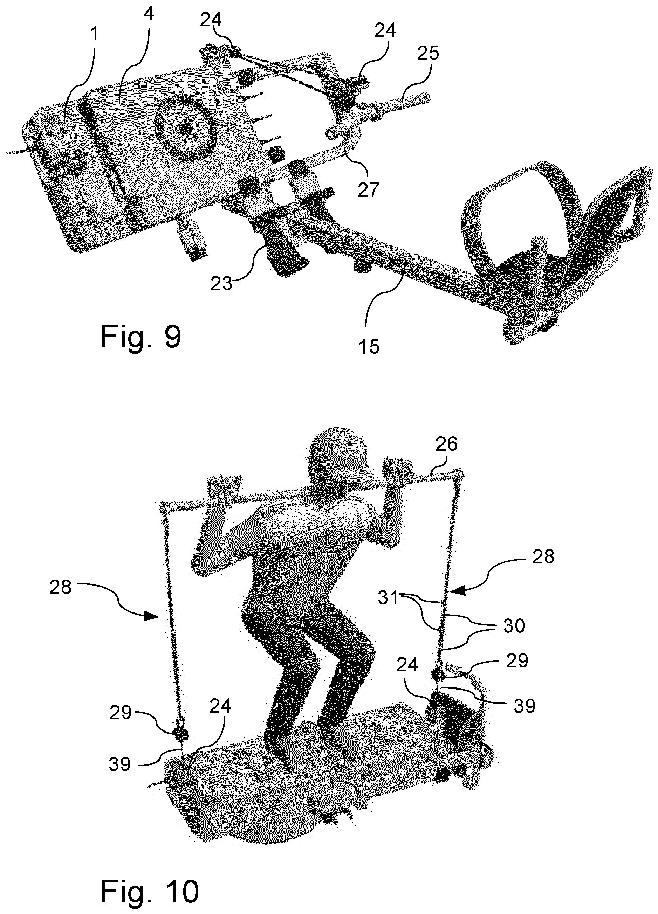

Figure 9 shows the multifunctional exercise apparatus configured in the rowing mode. For rowing, separate footplates 23 are installed. These footplates 23 are needed for foot fixation and to achieve a suitable geometry, where the feet are below the seat and below the cable 39 exit points, i.e. the points where cables 39 exit the first module housing and the frame 27 such that the user can grasp them. The footplates 23 also angle the feet correctly and they allow the user to bend his/her toes without falling out of the feet fixation. The frame 27, extending from the first module 1 and serving as support for the second module 4 in other configurations, is provided with a swivel 24. Similarly, the platform, formed by the first 1 and second 4 modules when arranged in the second position, is provided with a swivel 24. The cable 39, attached to a rowing handle 25 at one end, is guided by the swivels 24 to the cable reel system 2 which is operably connected to the torque resistance mechanism 3. When the user pulls at the rowing handle 25, he/she will experience the combined forces exerted by the torque resistance mechanism 3 and the flywheel 5 with brake 6.

When performing resistive exercises, the user can choose to use both cables 39 exiting from the sides of the platform formed by the first 1 and second 4 modules when arranged in the second position. This will typically be done with a wide bar 26 used for heavy exercises such as squat, bench press, and deadlift. It can also be used for bicep curls and other lighter exercises if desired. The "dual rope mode" is illustrated in Fig. 10 with the squat exercise as an example. The swivels 24 are positioned at each end of the platform formed by the upper surface of the first module 1 arranged flush with the upper surface of the second module 4. Each cable 39 from the cable reel system 2 is guided by the swivels 24 to a specific add-on selected by the user. In Fig. 10, the user has selected a wide bar 26 connected to slack lines 28 at each end. The slack lines 28 are safer when the wide bar 26 is used for "under bar" exercises, i.e. exercises where the user has placed his/her body underneath the bar or handle. The slackline 28 is a piece of rope installed between the handle and a mechanical end stop 29 provided at an end of cable 39. This extra rope can never be pulled into the machine and acts as a safety feature for the user. It works by ensuring that the user cannot be forced into a dangerous position between the handle/bar and the platform, i.e. when a squat is performed the slack line 28 stops the machine from pulling the handle/bar lower than the lowest position of the squat. The slack lines 28 also make it easier for the user to achieve a better position for initiating certain exercises. The slack line 28 has a number of rubber sleeves 30 arranged around it to stiffen the rope slightly with alternating loops 31 between the rubber sleeves 30 for allowing the end of the handle/bar to engage with the slack line 28. During the squat exercise, the forces exerted by the torque resistance mechanism 3 are experienced by the user and not the flywheel 5.

The swivel 24 allows the cable 39 to be pulled in any direction within a semi-sphere with its origin in the swivel 24. This flexibility makes it possible to use a wide range of add-ons, including a single hand handle for exercises using a single cable 39, such as triceps extensions, twisting exercises, or other asymmetrical exercises. To use one cable 39, the other cable 39 is simply left untouched at its end stop. A single hand handle is then attached to the single cable end stop 29. A slack line 28 is generally not needed since the user cannot get caught under the handle.

Instead of using the main cable exit points, the swivels 24 can also be attached to further attachment points on the exercise unit. The handle can then be connected to the cable end stop 29 as described above. This way, the cable is now in "Single Rope" mode but extending from a different position on the platform.

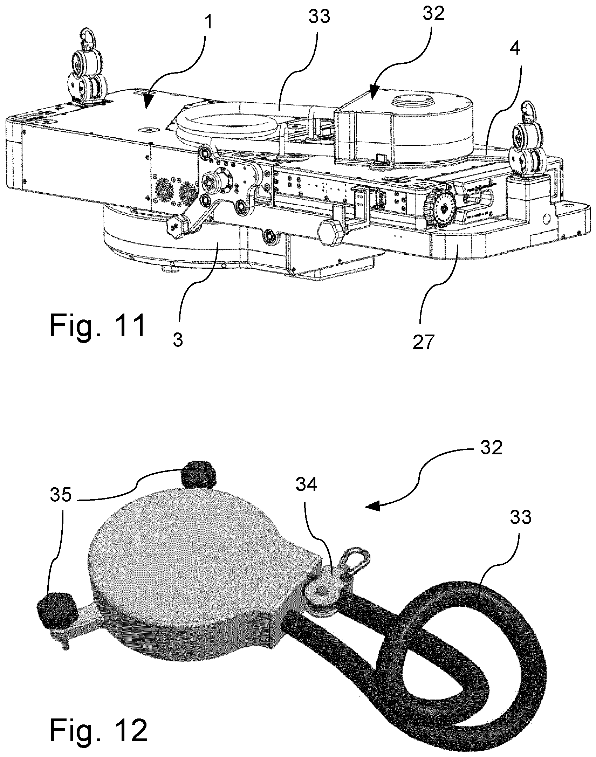

Figures 11 and 12 show a rope pulling unit 32 for connection with the flywheel 5 in the second module 4. The rope pulling unit 32 contains an endless rope 33. This rope 33 is driving an axle mounted in the hub 95 of the second module 4. Thus, the rope 33 will pull the flywheel 5 into motion with the possibility to do hand over hand pulling. The rope pulling unit 32 will preferably have a pulley 34 slidingly mounted on the rope 33 and be used for fixing a section of the endless rope 33 to the platform. Furthermore, the pulley 34 is adapted for the thicker rope usually used for rope pulling. The rope pulling unit 32 is releasably attached to the second module 4 by turning bolts 35. The head of the bolt 35 has a size and form easy for the human hand to manipulate.

The resistance of the endless rope 33 is adjusted by the braking band 6. As opposed to the finite cable stroke used in rowing, the rope 33 in the rope pulling add-on is endless (a closed loop) and can be pulled an "infinite" amount. The rope 33 is guided to a center attachment point by the pulley 34.

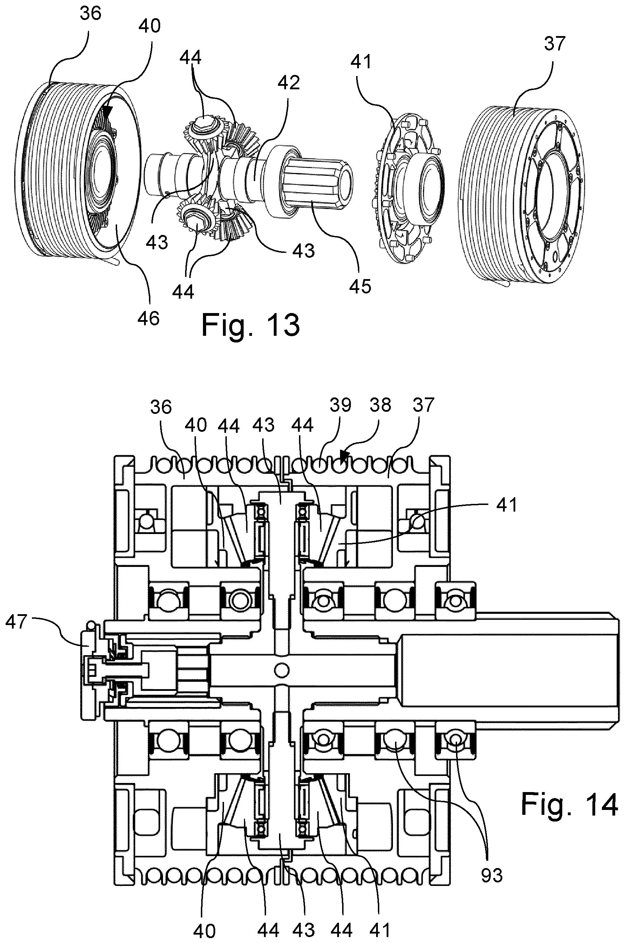

Figures 13 and 14 show the cable reel system 2. An upper cable reel 36 facing the second module 4 and a lower cable reel 37 facing the torque resistance mechanism 3 are both provided, on their outer circumference, with grooves 38 for accommodating a cable 39. On a side of the upper cable reel 36 facing the lower cable reel 37, a ring gear 40 is provided, and on a side of the lower cable reel 37 facing the upper cable reel 36 another ring gear 41 is provided. The upper and lower cable reels 36, 37 are rotatably journaled on a shaft 42. Between the upper 36 and the lower 37 cable reels, the shaft 42 is provided with four carriers 43 extending in the radial direction from the shaft 42 center axis. In the upper end of the carriers 43, pinion gears 44 are rotatably journaled and configured to mesh with both of the two ring gears 40, 41. While the four pinion gears 44 each rotate freely around their respective axis, they also follow the rotation of the shaft 42. Thus, if the shaft 42 is stationary and one reel 36, 37 is rotated clockwise, then the other reel 37, 36 will rotate counterclockwise. If one reel 36, 37 is stationary, the other reel 37, 36 will follow the rotation of the shaft 42 and hub 46. The moving reel will move twice as fast as the shaft 42 and hub 46 though. If both reels 36,37 are moved at the same speed, then the shaft 42 and hub 46 will follow their rotation 1:1. As a result of this mechanism, the torque on the shaft 42 will always be divided equally between each reel 36, 37.

The upper 36 and lower 37 cable reels are journaled on the shaft 42 using ball bearings 93. The ball bearings 93 are of stainless steel using non-contact metal seals. This type of seal keeps the grease in place while providing the least amount of friction.

At the end of the shaft 42 that is designed for engagement with the torque resistance mechanism 3, a splined part 45 is provided. At the other end of the shaft 42, the hub 46 is provided for engagement with a corresponding axle. When the hub 46 is not engaged with an axle it may be provided with a cap 47.

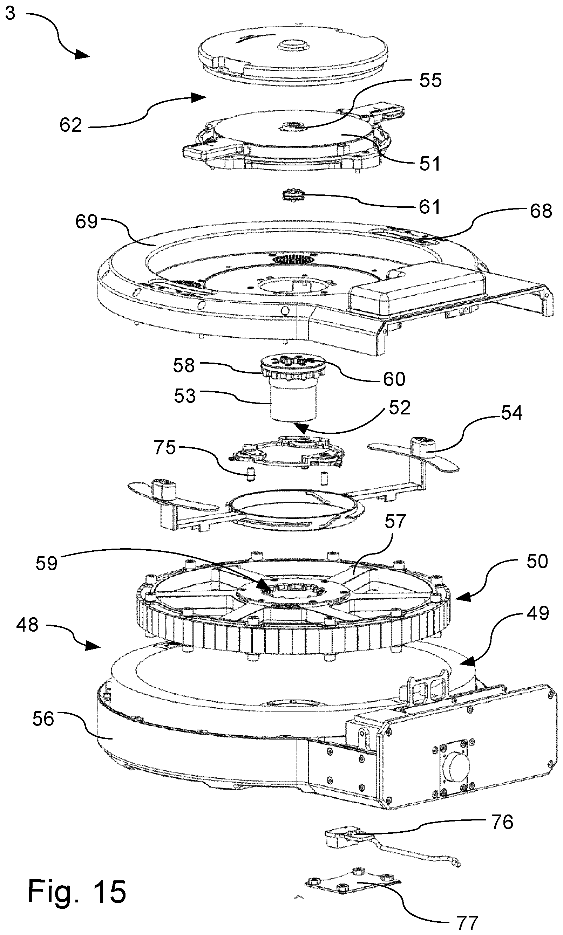

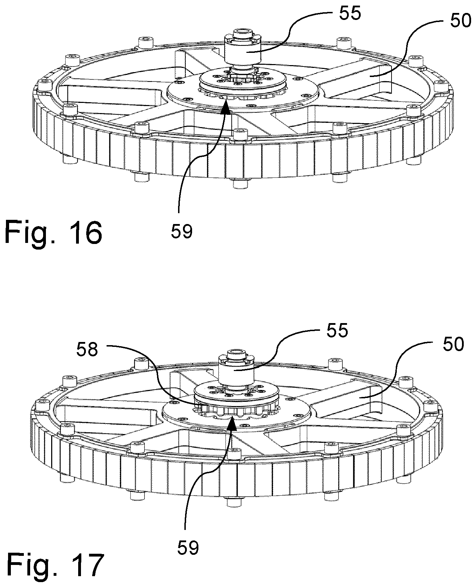

Figure 15 shows an exploded view of the torque resistance mechanism 3. The electrical torque resistance mechanism 3 comprises an electrical torque motor/generator 48 comprising a stator 49 and a rotor 50. In a hollow space defined by the stator 49, a torsional spring 51 is accommodated with the rotor 50. The electrical torque resistance mechanism 3 also comprises a part of a coupling mechanism, which may be selected as a hub 53 having a cavity 52 capable of mating with another part of a coupling mechanism, such as the shaft 42 of the cable reel system 2. Generally, the shaft 42 is splined, and the hub 53 contains complementing grooves for accommodating the shaft 42. The electrical torque resistance mechanism 3 also comprises a selector 54 capable of being moved to at least two positions. In a first position, illustrated in Figure 16, the coupling mechanism is engaged with the rotor 50 of the electrical torque motor/generator 48 and in a second position, illustrated in Figure 17, the coupling mechanism is engaged with a spring rotor 55 of the torsional spring 51.

The stator 49 is attached to a lower part of a first housing 56 and the rotor 50 is rotatably arranged in the hollow space defined by the essentially annular stator 49. The rotor 50 is provided with spokes 57 for connecting the rim of the rotor 50 with the center of the rotor 50. The center of the rotor 50 is provided with a recess 59 capable of being engaged with a part of the coupling mechanism, such as the hub 53. The hub 53 may be provided on an outer circumference with a plurality of teeth 58 or "dog teeth" that mate with matching openings machined or otherwise provided in the recess 59 at the center of the rotor 50.

The coupling mechanism used to illustrate the present invention is a hub 53 capable of being moved in axial direction between a first position for engagement with the electrical torque motor/generator 48 and a second position for engagement with the torsional spring 51. When the circumferential teeth 58 of the hub 53 are engaged with the corresponding recess 59 in the rotor center the engagement is locked. However, when a user moves the selector 54 it causes the hub 53 to move in an axial direction and thereby disengage the connection between the hub 53 and the electrical torque motor/generator 48. An upper section of the hub 53 is provided with a recessed rosette 60 having a shape complementary to the shape of a dog teeth gear 61 connected to the spring rotor 55 of the torsional spring 51.

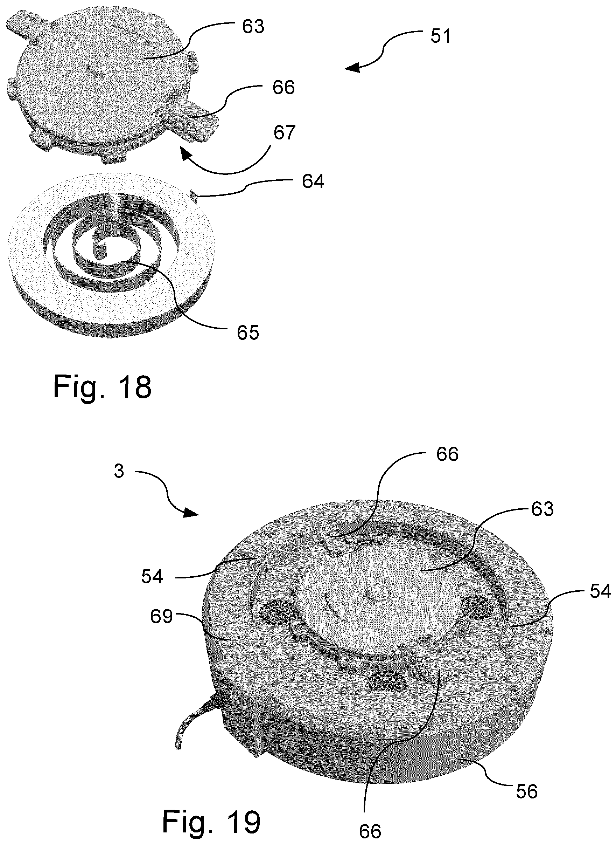

The torsional spring 51 is positioned in a separate, second spring housing 62 mounted rotatably in the first housing 56 of the electric torque resistance mechanism 3. Figure 18 shows the lid 63 of the spring housing 62 comprising a not shown pole protruding from the back side of the lid 63 for engagement with a hook 64. One end of spiral torsion spring 65 is engaged with rotor 55. Thus, when the dog teeth gear 61 provided on the spring rotor 55 is engaged with the rosette 60 of the hub 53, the user can perform exercises using the spiral torsion spring 65 as load.

Before the user can use the spiral torsion spring 65 as load it needs to be tensioned. The tensioning is performed by rotating the spring housing 62. To help the user twist the spring housing 62, it is provided with handles 66 attached to the lid 63. The handles 66 are provided with a lock 67 for preventing the spring housing 62 from spinning back to a relaxed position. After usage, the tensioning of the spiral torsion spring 65 may be relaxed by deactivating the lock 67.

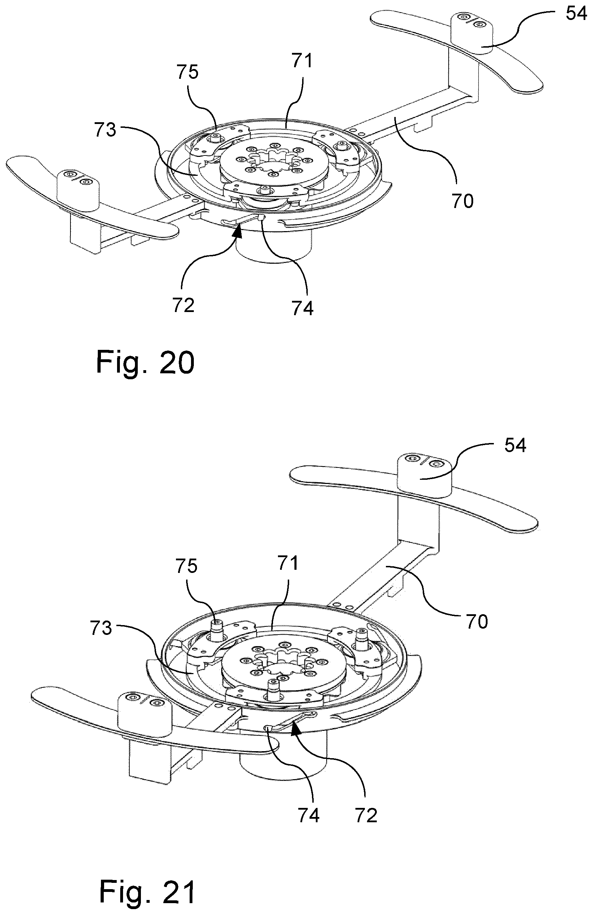

A toggle mechanism for moving the hub 53 in axial direction between the two positions is shown in detail in Figure 20 and Figure 21. The selectors 54 protrude through the openings 68 in the lid 69 of the first housing 56 comprising the electrical torque motor/generator 48. The selector 54 may be moved between a first position termed "motor" and a second position termed "spring" by the user. When the selector 54 is moved, arms 70 turn a shift collar 71 provided with traces 72. An axially moveable ring 73 is provided with radially extending pins 74 positioned in the traces 72. Since shift ring columns 75 are fixed to the lid 69, the ring 73 will move axially when the selector 54 is moved between positions. Figure 20 shows the second position in which the hub 53 is lifted and in which the rosette 60 will mesh with the dog teeth gear 61 provided on the spring rotor 55. Figure 21 shows the first position in which the hub 53 is lowered and the circumferential dog teeth 58 of the hub 53 are caused to mesh with the recess 59 of the rotor 50 of the electrical torque motor/generator 48.

The rotor 50 of the electrical torque motor/generator 48 is provided with an optical read head for an encoder 76. For increased serviceability of the encoder, a lid 77 is provided. The encoder may be selected as Renishaw RESOLUTE^{™} absolute encoder with the RESA30 rotary ring provided on the rotor.

The hub 53 may be provided with a further engagement mechanism for the second position (not shown).

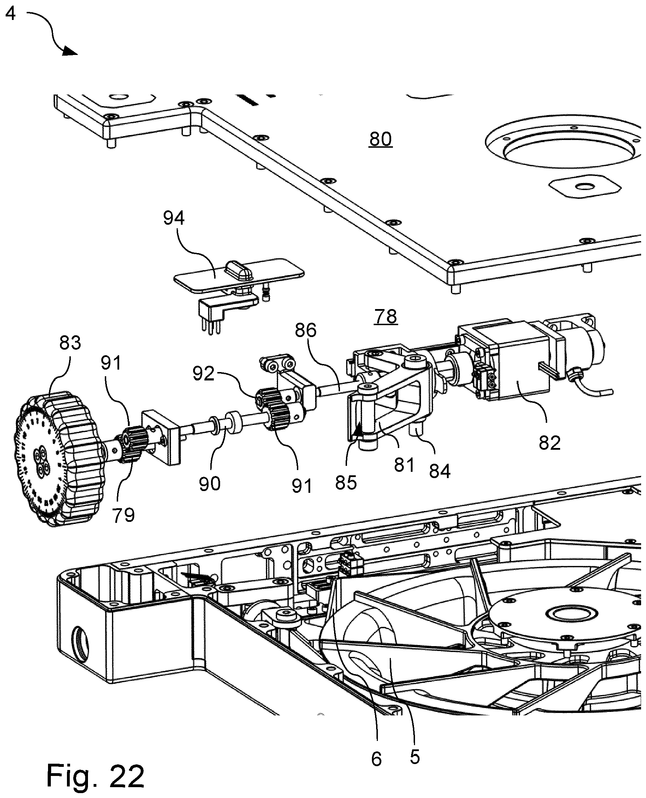

Figure 22 shows a part of the second module 4 in an exploded view. The exploded view extracts a tension adjusting mechanism 78 from the second module 4 and a manual knob slider 94 from lid 80 of the second module 4. The flywheel 5 is rotatably provided in the second module 4. The braking band 6 is arranged around a portion of the perimeter of the flywheel 5. The tension adjusting mechanism 78 comprises a moveable tension arm 81 capable of adjusting the tension of the braking band 6 and an electrical motor 82, e.g. a stepper motor, for operating the moveable arm 81. The tension adjusting mechanism 78 comprises a knob 83 for manual manipulation of the movable tension arm 81. The tension adjusting mechanism 78 also comprises a selector, i.e. manual knob slider 94, for enabling a user in a first position to operate the moveable tension arm 81 with the electrical motor 82 and in a second position to operate the moveable tension arm 81 with the knob 83.

The movable tension arm 81 is bended and, in a midsection 84, attached to a housing. One end of the movable tension arm 81, pointing towards the flywheel 5, is provided with a slot 85 for guiding and tensioning the braking band 6. The slot 85 may be provided with a roller to reduce the resistance between the slot 85 and braking band 6. The other end of the movable tension arm 81 is caused to move by the rotation of a tension arm shaft 86. The tension arm shaft 86 is rotated by the electrical motor 82. The revolutions of the electrical motor axle 87 may be transferred to movement of the movable tension arm 81 by fixing one end of the movable tension arm 81 on a sled 88 and providing a nut 89 on the sled 88. When the threaded axle 87 of the electrical motor 82 is engaged in the nut 89, the tension of the braking band 6 may be adjusted by the action of the electrical motor 82.

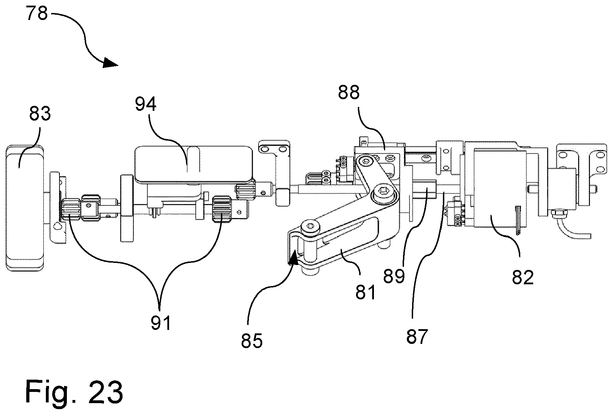

The manual knob 83 is provided with an axle having a gear 79 at the opposing end of the axle. The gear 79 may be engaged with the movable tension arm 81 by sliding a floating shaft 90 provided with gears 91 at each end. Figure 23 shows the tension adjusting mechanism 78 in the first position, i.e. where the manual manipulation is disengaged, and figure 22 shows the tension adjusting mechanism 78 in the second position, i.e. where the knob 83 is engaged and has full control of the movable tension arm 81 regardless of the position of the electrical motor 82. The two gears 91 on the floating shaft 90 are slightly unaligned relative to the gear 79 connected to the knob 83 and a gear 92 positioned on the tension arm shaft 86, so that one gear set meshes before the other.

In this embodiment, structures and features that are the same or similar to corresponding structures and features previously described or shown herein are denoted by the same reference numeral as previously used for simplicity.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage.

## Claims

1. A torque resistance mechanism (3) for a multifunctional exercise apparatus, the torque resistance mechanism (3) comprising an electrical torque motor/generator (48) having a hollow space, a torsional spring (51) accommodated co-axially in the hollow space, a part of a coupling mechanism having a first and a second part, and a selector (54) having a first and a second position,
wherein the selector (54) enables a user to engage the part of the coupling mechanism in a first position with the electrical torque motor/generator (48) and in a second position with the torsional spring (51).

2. The torque resistance mechanism (3) according to claim 1, wherein the electrical torque motor/generator (48) comprises a stator (49) attached to a first housing (56) and a rotor (50) capable of being engaged with one part of the coupling mechanism.

3. The torque resistance mechanism (3) according to claim 1 or 2, wherein the part of the coupling mechanism comprises an axially movable hub (53) having a first position for engagement with the electrical torque motor/generator (48) and a second position for engagement with the torsional spring (51).

4. The torque resistance mechanism (3) according to any one of the previous claims, wherein the torsional spring (51) is present in a second housing (62) rotatably mounted in the first housing (56).

5. The torque resistance mechanism (3) according to claim 4, wherein a first end of the torsional spring (51) is attached to the second housing (62) and a second end of the torsional spring (51) is attached to a spring rotor (55) connectable with the part of the coupling mechanism.

6. The torque resistance mechanism (3) according to claim 4 or 5, wherein the second housing (62) is provided with handles (66) for rotating the second housing (62), said handles (66) being provided with a releasable lock (67) for releasing the torsional spring (51).

7. The torque resistance mechanism (3) according to any one of the previous claims, wherein the electrical torque motor/generator (48) is controlled by a servo drive.

8. The torque resistance mechanism (3) according to claim 7, when depending of claim 2, wherein the rotor (50) of the electrical torque motor/generator (48) is equipped with an encoder (76) connected to the servo drive.

9. The torque resistance mechanism (3) according to any one of the previous claims, wherein the electrical torque motor/generator (48) is connected to a shunt circuity.

10. The torque resistance mechanism (3) according to any one of the previous claims, wherein the selector (54), when moved between the two positions, causes the hub (53) to move axially.

## Patentansprüche

1. Drehmomentwiderstands-Mechanismus (3) für eine multifunktionale Trainingsvorrichtung, wobei der Drehmomentwiderstands-Mechanismus (3) einen elektrischen Drehmomentmotor/-generator (48), der einen Hohlraum aufweist, eine Torsionsfeder (51), die koaxial im Hohlraum untergebracht ist, einen Teil eines Kupplungsmechanismus, der einen ersten und einen zweiten Teil aufweist, und einen Wähler (54) umfasst, der eine erste und eine zweite Stellung aufweist,
wobei der Wähler (54) einen Benutzer in die Lage versetzt, den Teil des Kupplungsmechanismus in einer ersten Stellung mit dem elektrischen Drehmomentmotor/- generator (48) und in einer zweiten Stellung mit der Torsionsfeder (51) in Eingriff zu bringen.

2. Drehmomentwiderstands-Mechanismus (3) nach Anspruch 1, wobei der elektrische Drehmomentmotor/-generator (48) einen Stator (49), der an einem ersten Gehäuse (56) befestigt ist, und einen Rotor (50) umfasst, der fähig ist, mit einem Teil des Kupplungsmechanismus im Eingriff zu sein.

3. Drehmomentwiderstands-Mechanismus (3) nach Anspruch 1 oder 2, wobei der Teil des Kupplungsmechanismus eine axial bewegliche Nabe (53) umfasst, die eine erste Stellung zum Eingriff mit dem elektrischen Drehmomentmotor/-generator (48) und eine zweite Stellung zum Eingriff mit der Torsionsfeder (51) aufweist.

4. Drehmomentwiderstands-Mechanismus (3) nach einem der vorhergehenden Ansprüche, wobei die Torsionsfeder (51) in einem zweiten Gehäuse (62) vorhanden ist, das drehbar im ersten Gehäuse (56) montiert ist.

5. Drehmomentwiderstands-Mechanismus (3) nach Anspruch 4, wobei ein erstes Ende der Torsionsfeder (51) am zweiten Gehäuse (62) befestigt ist und ein zweites Ende der Torsionsfeder (51) an einem Federrotor (55) befestigt ist, der mit dem Teil des Kupplungsmechanismus verbindbar ist.

6. Drehmomentwiderstands-Mechanismus (3) nach Anspruch 4 oder 5, wobei das zweite Gehäuse (62) mit Griffen (66) zum Drehen des zweiten Gehäuses (62) versehen ist, wobei die Griffe (66) mit einer lösbaren Rastung (67) zum Lösen der Torsionsfeder (51) versehen sind.

7. Drehmomentwiderstands-Mechanismus (3) nach einem der vorhergehenden Ansprüche, wobei der elektrische Drehmomentmotor/-generator (48) durch eine Servoansteuerung gesteuert wird.

8. Drehmomentwiderstands-Mechanismus (3) nach Anspruch 7, wenn abhängig von Anspruch 2, wobei der Rotor (50) des elektrischen Drehmomentmotors/-generators (48) mit einem Codierer (76) ausgestattet ist, der mit der Servoansteuerung verbunden ist.

9. Drehmomentwiderstands-Mechanismus (3) nach einem der vorhergehenden Ansprüche, wobei der elektrische Drehmomentmotor/-generator (48) mit einer Shuntschaltung verbunden ist.

10. Drehmomentwiderstands-Mechanismus (3) nach einem der vorhergehenden Ansprüche, wobei der Wähler (54), wenn er zwischen den zwei Stellungen bewegt wird, bewirkt, dass sich die Nabe (53) axial bewegt.

## Revendications

1. Un mécanisme de tenue au couple (3) pour un appareil d'exercice multifonctionnel, ce mécanisme de tenue au couple (3) comprenant un moteur couple/générateur électrique (48) comportant un espace creux, un ressort de torsion (51) aménagé sur le plan coaxial dans l'espace creux, une partie d'un mécanisme d'accouplement comportant une première partie et une seconde partie, et un sélecteur (54) ayant une première et une seconde position,
dans lequel le sélecteur (54) permet à un utilisateur de mettre en prise la partie du mécanisme d'accouplement dans une première position avec le moteur couple/générateur électrique (48), et dans une seconde position avec le ressort de torsion (51).

2. Le mécanisme de tenue au couple (3) selon la revendication 1, dans lequel le moteur couple/générateur électrique (48) comprend un stator (49) fixé sur un premier logement (56) et un rotor (50) qui peut être mis en prise sur une partie du mécanisme d'accouplement.

3. Le mécanisme de tenue au couple (3) selon la revendication 1 ou 2, dans lequel la partie du mécanisme d'accouplement comprend un moyeu pouvant bouger sur le plan axial (53), ayant une première position pour la mise en prise avec le moteur couple/générateur électrique (48), et une seconde position pour la mise en prise avec le ressort de torsion (51).

4. Le mécanisme de tenue au couple (3) selon l'une quelconque des revendications qui précèdent, dans lequel le ressort de torsion (51) est présent dans un second logement (62) qui est monté de manière rotative dans le premier logement (56).

5. Le mécanisme de tenue au couple (3) selon la revendication 4, dans lequel une première extrémité du ressort de torsion (51) est fixée sur le second logement (62) et une seconde extrémité du ressort de torsion (51) est fixée sur un rotor à ressort (55) pouvant être raccordé à la partie du mécanisme d'accouplement.

6. Le mécanisme de tenue au couple (3) selon la revendication 4 ou 5, dans lequel le second logement (62) est muni de poignées (66) pour faire tourner le second logement (62), lesdites poignées (66) étant munies d'un verrou à déblocage (67) pour débloquer le ressort de torsion (51).

7. Le mécanisme de tenue au couple (3) selon l'une quelconque des revendications qui précèdent, dans lequel le moteur couple/générateur électrique (48) est commandé par un servomoteur.

8. Le mécanisme de tenue au couple (3) selon la revendication 7, lorsqu'il dépend de la revendication 2, dans lequel le rotor (50) du moteur couple/générateur électrique (48) est équipé d'un codeur (76) raccordé au servomoteur.

9. Le mécanisme de tenue au couple (3) selon l'une quelconque des revendications qui précèdent, dans lequel le moteur couple/générateur électrique (48) est raccordé à des circuits shunt.

10. Le mécanisme de tenue au couple (3) selon l'une quelconque des revendications qui précèdent, dans lequel le sélecteur (54), lorsqu'il est déplacé entre les deux positions, provoque un déplacement axial du moyeu (53).
